# EUROPÄISCHE PATENTANMELDUNG

(11) **EP 1 425 990 A1**
(43) Veröffentlichungstag der Anmeldung: **09.06.2004**
(21) Anmeldenummer: 03026840.3
(22) Anmeldetag: 21.11.2003
(51) Int. Cl.: A47B 97/00

(54) **Einrichtungselement mit selbstleuchtenden Sichtflächen und Verfahren zur Herstellung**

(30) Priorität: 06.12.2002 DE 10257352
(71) Anmelder: Walter Hösel Objekteinrichtungs-GmbH, 9020 Klagenfurt (AT)
(72) Erfinder: Lengfeldner, Erhard, 9020 Klagenfurt (AT)
(74) Vertreter: Riebling, Peter, Dr.-Ing.

(57) **Zusammenfassung**

Gegenstand der Erfindung ist ein Einrichtungselement mit einem Lumineszenzeffekt in Form einer unterhalb einer transparenten Schicht angeordneten lumineszierenden Struktur. Erfindungsgemäß werden dabei langnachleuchtende Lumineszenzpigmente und/oder im nichtsichtbaren Wellenlängenbereich anregbare Lumineszenzelemente und/oder mittels eines elektrischen Feldes anregbare Elektroluminophore verwendet beziehungsweise Kombinationen der genannten Lumineszenzeffekte. In einer bevorzugten Ausführungsform werden die Lumineszenzeffekte grafisch mittels Druckprozessen gestaltet und weisen die Einrichtungselemente eine elementweise dreidimensional geformte Oberfläche auf und wird unter einem Einrichtungsgegenstand ein Möbelelement, beispielsweise ein Stuhl, ein Tisch, ein Kasten, ein Boden-, Decken- oder Wandelement und dergleichen Element verstanden, das in einem Haus oder Büro oder allgemein in einem Gebäude, Fahrzeug, Schiff oder Flugzeug Verwendung findet.

## Beschreibung

Gegenstand der Erfindung ist ein Einrichtungselement mit selbstleuchtenden Sichtflächen nach dem Oberbegriff des geltenden Patentanspruches 1.

In der DE 101 17 105 A1 ist ein Möbelstück mit leuchtenden Sichtflächen beschrieben. Dieses besteht aus einem oder mehreren Fensterelementen mit einer Rahmenkonstruktion mit zwei voneinander beabstandeten Glasscheiben, in deren Zwischenraum ein Leuchtmittel angeordnet ist. Nachteilig ist jedoch, dass als Möbelfläche lediglich eine Glasscheibe vorgesehen ist, die bruchempfindlich ist, in der Oberflächenstruktur nicht variabel ist und das verwendete Leuchtmittel eine eigene Stromversorgung benötigt und eine unerwünschte Wärmeabstrahlung erzeugt.

Mit der DE 100 43 516 A1 wird ein weiteres Möbelstück beschrieben, bei dem ein aktives Leuchtmittel im Zwischenraum zwischen Glasscheiben angeordnet ist und ein Streulicht auf die Möbelfläche erzeugt. Auch hier gelten die Nachteile, die anhand der DE 101 17 105 A1 beschrieben wurden.

Der Erfindung liegt deshalb die Aufgabe zugrunde, einen Einrichtungsgegenstand der eingangs genannten Art so weiterzubilden, dass mindestens einer oder mehreren der Sichtflächen des Einrichtungsgegenstandes eine Leuchterscheinung zugeordnet wird, die mit geringem Energiebedarf ohne wesentliche Wärmeabstrahlung arbeitet und die nicht auf lichtdurchlässige Flächen angewiesen ist.

Zur Lösung der gestellten Aufgabe ist die Erfindung dadurch gekennzeichnet, dass auf der Sichtfläche des Einrichtungsgegenstandes mindestens stückweise eine oder mehrere Leuchtfolien angeordnet sind.

Mit der gegebenen technischen Lehre ergibt sich der wesentliche Vorteil, dass nun auf jede beliebige Möbelfläche eine Leuchtfolie aufgebracht werden kann, die entweder als aktive, leuchtende Folie oder als passiv nachleuchtende Folie ausgebildet ist.

Die Leuchtfolie kann stückweise oder großflächig auf der Sichtseite des Möbelteils oder des Einrichtungsgegenstandes angeordnet sein. Ebenso können verschiedenartig leuchtende Folien in bestimmten attraktiven Mustern und Zusammensetzungen Teile der Sichtfläche des Möbels bilden.

Man ist deshalb nicht mehr auf die Ausbildung der Möbelflächen als Glasscheiben angewiesen und auf energie-verzehrende, wärmeerzeugende Beleuchtungsquellen, wie Punkt-Lichtstrahler oder Glühlampen kann verzichtet werden.

Für die Leuchtfolie gibt es eine Reihe von Ausführungsformen, die alle als erfindungswesentlich beansprucht werden.

Eine erste bevorzugte Ausführungsform schlägt eine Leuchtfolie vor, bei der unterhalb einer transparenten Schicht eine lumineszierenden Struktur angeordnet ist. Erfindungsgemäß werden dabei langnachleuchtende Lumineszenzpigmente und/oder im nichtsichtbaren Wellenlängenbereich anregbare Lumineszenzelemente und/oder mittels eines elektrischen Feldes anregbare Elektroluminophore verwendet oder auch Kombinationen der genannten Lumineszenzeffekte.

In einer bevorzugten Ausführungsform werden die Lumineszenzeffekte grafisch mittels Druckprozessen gestaltet und die Einrichtungselemente können auch eine stückweise dreidimensional geformte Oberfläche aufweisen.

Erfindungsgemäß wird unter einem Einrichtungsgegenstand ein Möbelelement, beispielsweise ein Stuhl, ein Tisch, ein Kasten, ein Boden-, Decken- oder Wandelement und dergleichen Elemente verstanden, das in einem Haus oder Büro oder allgemein in einem Gebäude, Fahrzeug, Schiff oder Flugzeug Verwendung findet.

Die Erfindung schlägt vor, zinksulfidische Phosphore für die Herstellung von Nachleuchteffekten zu verwenden. Die UV-Stabilität und die Beständigkeit gegen Temperatur-Wasserdampfbelastung ist dabei neben der doch relativ kurzen Nachleuchtdauer von einigen wenigen Stunden bis im günstigsten Fall einigen 3 bis 8 Stunden im Falle ohne radioaktive Aktivierung für Möbelflächen durchaus akzeptabel.

Als Alternativen werden elektrolumineszierende Dickfilm-Hintergrundbeleuchtungselemente vorgeschlagen, die aus sogenannten Strontium-Aluminat Pigmenten und/oder Silikate-Phosphoren mit um den Faktor 10 bis 60 längeren Nachleuchtzeiten, verglichen mit zinksulfidischen Pigmenten, bestehen. Diese neuartigen Pigmente bieten eine hervorragende Wasserdampfstabilität und Beständigkeit gegenüber Temperatur- und Temperatur-Druck- Einwirkungen und weisen eine wesentlich längere Nachleuchtzeit bis zu einem Tag und darüber auf und insbesondere auch nach einer Anregung mittels künstlichem Licht, wie beispielsweise einer Leuchtstofflampe. Ferner weisen diese eine hervorragende UV-Stabiltät auf und sind insgesamt daher wesentlich geeignetere Pigmente als zinksulfidische Pigmente für die Herstellung von langlebigen und qualitativ hochwertigen Produkten.

Unter im nichtsichtbaren Wellenlängenbereich anregbare Lumineszenzsubstanzen werden Farbstoffe und insbesondere anorganische Lumineszenzpigmente verstanden, die mittels Lichtquellen unterhalb 400 nm und/oder oberhalb 700 nm derart angeregt werden können, dass im visuell sichtbaren Wellenlängenbereich, also innerhalb 400 bis 700 nm, ein optischer Effekt wahrnehmbar ist. Insbesondere werden darunter UV-aktive Substanzen verstanden, die mittels Schwarzlichtquellen oder neuartigen UV-LED Elementen angeregt werden können und derart eine Stokes-Strahlung im sichtbaren Wellenlängenbereich emittieren, als auch sogenannte Anti-Stokes Systeme, die mittels NIR-Strahlung, also im Wellenlängenbereich von etwa 680 nm bis 1500 nm, angeregt werden können und derart durch einen Mehrphotonenprozess Lichteffekte im sichtbaren Wellenlängenbereich bewirken.

Unter im elektrischen Feld anregbaren Elektroluminophoren werden üblicherweise zinksulphidische Phosphore verstanden, die in einem elektrischen Wechselfeld von typisch einigen 50 Hz bis einige 5 bis 20 kHz, bevorzugt im Bereich 400 Hz bis 2 kHz, eine sichtbare Emission von einigen cd/m² bis zu einigen 100 cd/m² bewirken.

Die vorliegende Erfindung betrifft ein Einrichtungselement mit integriertem Nachleuchteffekt und/oder einem Lumineszenzeffekt aufgrund einer Anregung im nichtsichtbaren Wellenlängenbereich und/oder einem Elektrolumineszenzeffekt beziehungsweise aus Kombinationen der genannten Effekte und einem Verfahren zur Herstellung desselben. Als Einrichtungselemente werden Innenräume in Flugzeugen, Eisenbahnwaggons, Reisebussen, Automobilen, Sportartikeln, Booten, Sportstätten-Ausstattungen und dergleichen mehr verstanden. Darüber hinaus auch Einrichtungsgegenstände und Sichtflächen in öffentliche Einrichtungen, wie Krankenhäusern, Behörden, Hotels, Bahnhöfen und dergleichen Räumlichkeiten mit hohem Wert hinsichtlich optischer Effekte, Hygiene, leichter Reinigbarkeit, hoher Abriebbeständigkeit der Oberflächen.

Die Aktivierung des Nachleuchteffektes ist bevorzugt auch bei künstlichem Licht aus Leuchtstoffröhren möglich und der Effekt bei Beleuchtung mittels sogenannter Schwarzlichtquellen oder UV-LED-Systemen, also bei Bestrahlung mit langwelligem UV-Licht besonders deutlich. Sichtbare Leuchteffekte können auch durch eine NIR-Bestrahlung erzeugt werden und in Kombination mit elektrolumineszierenden Effekten können gut steuerbare Lichteffekte erzeugt werden.

In einer bevorzugten Ausführungsform werden die Lumineszenzeffekte unterhalb einer transparenten beziehungsweise weitgehend transparenten beziehungsweise transluzenten oder lasierenden Schicht mit hoher Abriebbeständigkeit und einer für den jeweiligen Verwendungszweck optimierten Oberflächenstruktur mittels grafischer Druckprozesse in flächiger Bogenform oder in Bahnen gestaltet und anschließend zu einem Einrichtungselement mit einem entsprechenden Körper gefügt, wobei bevorzugt ein mindestens stückweise dreidimensional gestaltetes Einrichtungselement geformt beziehungsweise prozessiert wird.

In einem erfindungsgemäßen Verfahren zur Herstellung werden zunächst Folienbögen und/oder Folienbahnen eines geeigneten transparenten beziehungsweise transluzenten Materials mittels geeigneter Drucktechnologien grafisch gestaltet.

Unter Folienbögen und/oder Folienbahnen werden dabei flächige Substrate aus melaminharzgetränkten Papieren und dergleichen duroplastische Substrate verwendet. Darüber hinaus auch alle möglichen Arten thermoplastischer Kunststoffe, wie Polyvinylfluorid (PVF), zum Beispiel TEDLAR, einem geschützten Markennamen der Firma E. I. du Pont de Nemours & C., Inc., und /oder aus Polyvinylidenfluorid (PVdF), zum Beispiel KYNAR, einem geschützten Markennamen der Firmen Pennwalt Corporation / Elf Atochem North America, Inc., oder Polycarbonat (PC), Polymethylmethacrylat (PMMA), Acrylnitril-Butadien-Styrol (ABS), Polyethylenterephtalat (PETP), Polyethersulfon (PES), Polyimid (PI), Polypropylen (PP), Polyethylen (PE), Polyetherimid (PEI), Polyetheretherketon (PEEK) und Mischungen (Blends) der genannten Polymere oder aus einem Material aus Polychlortrifluorethylen und Copolymeren (PCTFE), mit dem Markennamen ACLAR (Allied Signal Engineering Plastics, Morristown, NJ 07960, US) und dergleichen thermoplastische und transparente Folien mit einer Dicke von 6 bis 150 Mikrometern und darüber als auch wesentlich dickeren Folien aus beispielsweise Polyether-Imid-Blocker (PEI) Material mit einer Dicke im Bereich 100 bis 1.200 Mikrometern.

Als Drucktechnologien werden dabei alle Arten von Offsetdrucktechniken, Flexodrucktechniken, Tiefdrucktechniken, digitale Drucktechniken wie InkJet-Techniken und insbesondere alle Arten von Siebdrucktechniken, vom Flachbettsiebdruck und Zylindersiebdruck bis zum Schablonendruck mittels galvanischer Siebe und entsprechender Rakeltechnologie, als auch der diversen Transfertechnologien verwendet.

Bei Verwendung der Siebdrucktechnik werden insbesondere Siebdruckfarben auf Wasserbasis bevorzugt, da es bei allen Arten von Drucktechniken darauf ankommt, einen hohen und homogenen Füllgrad zu erreichen. Speziell bei den verwendeten anorganischen Lumineszenzpigmenten mit einem spezifischen Gewicht von über 2 bis 4,3 gr/cm³ werden Siebdruckfarbenfüllgrade von größer 50 bis größer 70-Gewichts-Prozent benötigt. Bei Verwendung von lösmittelbasierenden Siebdruckfarben mit derart hohen Füllgraden stellt das Trocknen ein sehr großes Problem dar und es wurde gefunden, dass wasserbasierende Druckfarben einen guten Haftverbund auf thermoplastischen Folien aufweisen, rasch trocknen und einen insgesamt guten Haftverbund mit sehr guter Verformbarkeit bieten und darüber hinaus umwelttechnisch wesentlich günstigere Verhältnisse bieten verglichen zu lösemittelbasierenden Systemen.

Unter einer transparenten Schicht werden sowohl thermoplastische Folien als auch Melaminharz-getränkte Papiere verstanden. Melaminharzdekorfolien werden in der Möbelindustrie sehr häufig als Dekorfolien verwendet und weisen eine hervorragende Oberflächen- und Temperaturbeständigkeit auf.

Übliche harzgetränkte Papiere werden erfindungsgemäß innenliegend grafisch gestaltet und weisen im nicht laminierten Zustand einen nahezu opaken Zustand auf. Erst im laminierten beziehungsweise gepressten Zustand, also im duroplastischen Zustand, wird eine gute Transparenz beziehungsweise Transluzenz erreicht.

Die grafische Gestaltung derartiger Melaminharzfolien erfolgt meist mittels Siebdruck, kann jedoch auch mittels eines Transferverfahrens erreicht werden.

Erfindungsgemäß können nunmehr anorganische Pigmente mit einem Lumineszenzeffekt dispergiert in das Melaminharz gegeben werden, wobei bevorzugt die innenliegende Seite mit den Lumineszenzeffekt Pigmenten versehen wird. Die Lumineszenzeffekt Pigmente können auch in die Bedruckungsfarbe gemischt werden und/oder können in einem eigenen Druckvorgang flächig oder grafisch auf die Innenseite der transparenten Schicht gegeben werden als auch auf die bereits grafisch gestaltete transparente Schicht.

Verfahrenstechnisch können derartige Beschichtungsvorgänge auf Bögen oder auf Bahnen vorgenommen werden. Bei thermoplastisch dünnen Folien von wenigen 10 µm Dicke ist die Verwendung von Bahnen ein bevorzugtes Beschichtungsverfahren, wobei dabei auch Transfer-Beschichtungen gewählt werden können.

Unter einem Lumineszenzeffekt (2) werden Effekte verstanden, die im **Phosphor Handbook**, **CRC Press** ISBN 0-8493-7560-6 (May 1998)
für langnachleuchtende Effekte in Kapitel 12.2, Seiten 651-658 und
für infrarot Up-conversion Phosphore in Kapitel 12.1, Seiten 643-650 und
für inorganische AC-Elektroluminophore in Kapitel 9.2, Seiten 601-610 übersichtsartig dargestellt sind, verstanden.

Unter einem farbkonvertierenden System werden alle Arten von organischen Stoffen und/oder anorganischen Pigmenten verstanden, die eine Farbverschiebung in einen höheren Wellenlängenbereich bewirken. Beispielhaft werden diesbezüglich die Fluoreszenz Pigmente mit der Typenbezeichnung FA-001, FA-005, FA-006, FA-007 und dergleichen der Firma Sinloihi Co., Ltd. 2-19-2 Dai, Kamakura, Kanagawa, Japan genannt.

Unter anorganischen Pigmenten mit Konversionseigenschaften kann die Erfindung WO 98/12757 (**Siemens**, Filed: 20.09.96) "Wellenlängekonvertierende Vergussmasse, deren Verwendung und Verfahren zu deren Herstellung" genannt werden. und werden derartige Systeme zur Herstellung von weißen LED's verwendet, da derartige anorganische Konversionssysteme eine sehr gute Temperatur- und UV-Beständigkeit aufweisen und derart sehr langlebig bei gleichbleibenden Eigenschaften sind.

Unter einem Tag-Nacht-Effekt wird ein für das menschliche Auge sichtbarer Effekt verstanden, bei dem am Tag überwiegend durch die Körperfarbe des Einrichtungselementes beziehungsweise anhand der grafischen Gestaltung die grafische beziehungsweise farbliche Gestaltung wahrgenommen wird und bei dem in der Nacht beziehungsweise Dunkelheit ein zusätzlicher Effekt aufgrund der Lumineszenzstruktur auf Basis der genannten Lumineszenzeffekte eingestellt werden kann.

Im Falle der Verwendung von langnachleuchtenden Pigmenten, bevorzugt von Seltene Erden dotierte beziehungsweise aktivierte Phosphore beziehungsweise Aluminate und Silikate und Oxide, neben klassischen zinksulfidischen Phosphorpigmenten, wird nach einer entsprechenden Bestrahlung mit UV-Licht und künstlichem Licht, zum Beispiel Licht aus Neon-Röhren, insbesondere Licht im Bereich 200 bis 480 nm mit einer optimalen Wirkung im Bereich 350 bis 380 nm, eine automatische Emission mit typischen fluoreszenten Emissionsfarben erfolgen, beispielhaft mit einem Wellenlängenmaximum im Bereich gelb-grün von etwa 520 nm. Im Gegensatz zum helladaptierten Auge, also bei weitgehend geschlossenen Pupillen und einem vorwiegenden Sehen mit Zäpfchen und einer maximalen Empfindlichkeit im Bereich 555 nm (vergleiche DIN 5031 "Strahlungsphysik im optischen Bereich und Lichttechnik") sind beim dunkeladaptierten Auge die Pupillen maximal geweitet und erfolgt das Sehen vorwiegend mit den Stäbchen und liegt die maximale Empfindlichkeit bei etwa
blau-grün im Bereich 507 nm.

Beispielhaft wird in der Deutschen Industrienorm DIN 76510, Teil 1 bis 4, für Fluchtwegmarkierungen eine Nachleuchtdauer von größer 340 Minuten bei einer Helligkeit von größer 0,3 mcd/m² gefordert; beziehungsweise gemäß der PSPA (Photoluminescent Safety Products Association) größer 450 Minuten, wobei bei der DIN 76510 10 Minuten nach der Anregung zumindest 20 mcd/m² und 1 Stunde nach der Anregung zumindest 2,8 mcd/m² erreicht werden müssen.

Mit neuartigen Seltene Erden aktivierten Aluminaten und Silikaten sind bei Verwendung entsprechender Schichtdicken mehr als 10-fache Werte bis zu 120 Stunden und 300 mcd/m² erreichbar. Im vorliegenden erfinderischen Einrichtungselement wird im allgemeinen auf die Anbringung derart dicker Pigment-Schichten von oftmals einigen 100 bis 300 µm Dicke verzichtet beziehungsweise werden derartige Elemente bevorzugt nur punktuell signalgebend verwendet.

Neben diesen lang nachleuchtenden Phosphoren können auch UV-anregbare Pigmente verwendet werden und deren Einsatz ist in einem Einrichtungselelement von besonderem Interesse, da neben sogenannten Schwarzlichtlampen und Schwarzlichtröhren neuartige LED-Bauelemente bereits in der Lage sind, eine UV-Strahlung zum Beispiel mit einem Maximum bei 373 nm und 0,7 mW, Nichia-Japan (http://www.nichia.co.jp/product/led.html) oder bei 375 nm und 0,7 mW, Marubeni-USA (http://www.marubeni-sunnyvale.com/uv lamp.html#technical data) oder der NCCU001 E mit 365 nm und 500 mW bei 100.000 Stunden Lebensdauer von Nichia-Japan (http://www.nichia.co.jp/info/news/new20020926.html) oder der 400 nm blauen LED mit 500 bis maximal 700 mcds von BivarOpto™, der Optoelectronics Division of Bivar, Inc. USA (www.bivar.com ) und weiteren Herstellern, abzugeben. Damit sind langwellige UV-Lichtquellen mit Niederspannung, typisch kleiner 5 Volt-DC, zu betreiben und können erstmalig sehr einfach Ein- und Ausgeschaltet beziehungsweise gepulst werden und sind daher ohne Doppelisolationsvorschriften elektrisch sehr einfach zu installieren und zu betreiben und weisen darüber hinaus für LED-Bauteile typische hohe Lebensdauerwerte auf. Allerdings müssen bei der Anbringung die möglichen Auswirkungen auf die menschliche Haut und die Augen berücksichtigt werden, sowie die Auswirkungen auf Tiere und Pflanzen und weiters auf nicht UVbeständige Elemente.

Über langnachleuchtende Pigmente ist übersichtsartig im **Phosphor Handbook**, **CRC Press** ISBN 0-8493-7560-6, May, 1998; in Kapitel 12.2 auf den Seiten 651 bis 658 von Nemoto-Japan, einem Pionier im Bereich derartiger langnachleuchtender Pigmente, ein Beitrag abgedruckt.

Im Falle der Verwendung von sogenannten Up-conversion, also Anti-Stokes Pigmenten, nachzulesen im Lehrbuch von **G. Blasse, B.C. Grabmaier "Luminescent Materials"** Springer-Verlag 1994, ISBN 0-387-58019-0 im Kapitel 10.1 "Upconversion" auf den Seiten 195-202 und im **Phosphor Handbook, CRC** Press ISBN 0-8493-7560-6, May, 1998; in Kapitel 12.1 und 12.3 auf den Seiten 643 bis 650, werden Mehrphotonenprozesse zur Emission von sichtbarem Licht aufgrund der Bestrahlung mit NIR-Strahlung verwendet.

Derartige Up-conversion (UC) Pigmente sind unter der Bezeichnung Lumilux CD-Pigmente, zum Beispiel Lumilux Grün UC 6 oder 3 oder 2 oder Gelb UC 6 oder Rot UC 6 von der Firma Honeywell in Seelze, Deutschland erhältlich als auch unter der Bezeichnung H925-Green und H718-Red, H728-Orange-Red, H738-Orange, und weiteren Pigmenten von der Firma KPT in Changchun, China mit einem Anregungsbereich von typisch 700 bis 1500 nm beziehungsweise 800 bis 1400 nm beziehungsweise bei 970 nm. Üblicherweise werden derartige Pigmente zur Sichtbarmachung von IR-Laserstrahlen und in der Sicherheitsdruckindustrie verwendet.

Die Verwendung derartiger UC-Pigmente in einem Einrichtungselement erscheint insofern sinnvoll und ermöglicht sehr neuartige Lichteffekte, da neben NIR-Strahlern neuartige NIR-LED Lichtquellen sehr kostengünstig, sehr klein und einfach zu integrieren sind und sehr langlebig bis zu einigen 30.000 bis 100.000 Betriebsstunden sind und durch wenige Volt Gleichspannung betreibbar sind und beliebig oft ein-ausschaltbar sind beziehungsweise gepulst betrieben werden können und dabei keine Lebensdauereinbuße erleiden und weiters keine schädliche Auswirkungen auf Mensch, Tier und Pflanzen bewirken. Weiters sind übliche transparente beziehungsweise transluzente Schichten und grafische Gestaltungen beziehungsweise allgemeine Druckfarben beziehungsweise Körperelemente auf Basis opaker Schichten und Elemente für NIR-Strahlung im Bereich 700 bis 1500 nm beziehungsweise 780 bis 1100 nm weitgehend durchsichtig. Es kann daher die Anregung von UC-Pigmenten durch derartige visuell undurchsichtige Strukturen mittels NIR-Strahlung erfolgen und derart ein UC-Pigment innenliegend angeregt werden. Beispielsweise kann die Anregung von der Betrachtungsseite erfolgen, es kann aber auch eine Anregung beziehungsweise Bestrahlung von der Rückseite erfolgen.

Unter einem elektrolumineszierenden (EL) Pigmente beziehungsweise Anordungen werden anorganische zinksulfidische EL-Systeme verstanden, die bei Wechselstrom von einigen größer 50 Hz bis einigen 400 Hz und einigen 2 kHz bei einigen 100 bis 200 Volt und darüber und darunter betrieben werden und im Bereich einige cd/m² bis einige 100 cd/m² Leuchtdichte bewirken.

Im "Phosphor Handbook" CRC Press ISBN 0-8493-7560-6, May, 1998 werden im Kapitel 9.2 auf den Seiten 601 bis 612 die Grundprinzipien dargelegt.

In der vorliegenden Erfindung werden derartige EL-Strukturen innenliegend drucktechnisch derart vorgesehen, dass ein Tag-Nacht-Effekt durch elektrische Aktivierung erfolgen kann. Dabei werden bevorzugt EL-Streufelder eingeprägt und die entsprechenden Elektroden auf der Seite des Körperelementes vorgesehen und auf der Seite der transparenten Schicht lediglich eine floatende transparente beziehungsweise weitgehend transparente und dielektrisch im Wechselfeld leitende Struktur vorgesehen.

Einige Ausführungsbeispiele der Erfindung werden nachfolgend anhand der Zeichnungsfiguren näher beschrieben.

Dabei zeigt:
- Figur 1:: Schematisiert ein Ausführungsbeispiel für die Ausbildung von Möbeln mit leuchtenden Sichtflächen

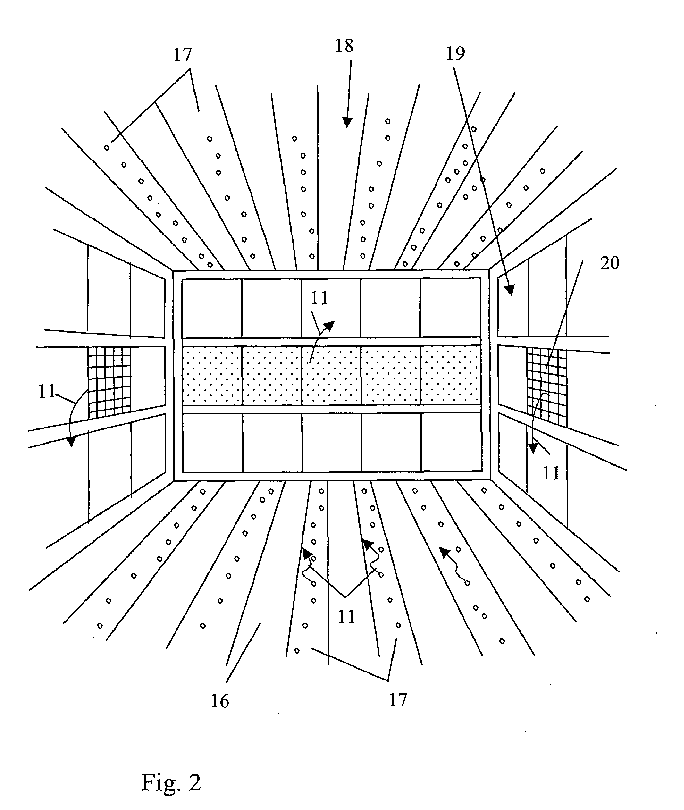

- Figur 2:: Ein Ausführungsbeispiel zur Anordnung von leuchtenden Sichtflächen an Fußboden, Wand- und Decken-Bekleidungen eines Raumes
- Figur 3:: Die Darstellung der möglichen Muster von Sichtflächen
- Figur 4:: eine schematische Darstellung eines erfindungsgemäßen Einrichtungselementes (1) mit einem Lumineszenzeffekt (2) in einer einfachen Ausführung in geschnittenem Zustand.
- Figur 5:: eine schematische Darstellung eines erfindungsgemäßen Einrichtungselementes (1) mit einem Lumineszenzeffekt (2) in einer Ausführung in geschnittenem Zustand mit zusätzlicher grafischer Gestaltung auf der Lumineszenzstruktur (3).
- Figur 6:: eine schematische Darstellung eines erfindungsgemäßen Einrichtungselementes (1) mit einem Lumineszenzeffekt (2) in einer Ausführung in geschnittenem Zustand mit zusätzlicher grafischer Gestaltung unterhalb der Lumineszenzstruktur (3).
- Figur 7:: eine schematische Darstellung eines erfindungsgemäßen Einrichtungselementes (1) mit einem Lumineszenzeffekt (2) in einer Ausführung in geschnittenem Zustand nach Figur 2 und 3, wobei bereits in der Melaminharzdeckfolie (8) flächen- und/oder matrixartig Lumineszenzeffekte (2) in Form von feinkörnigen Pigmenten gegeben sind.

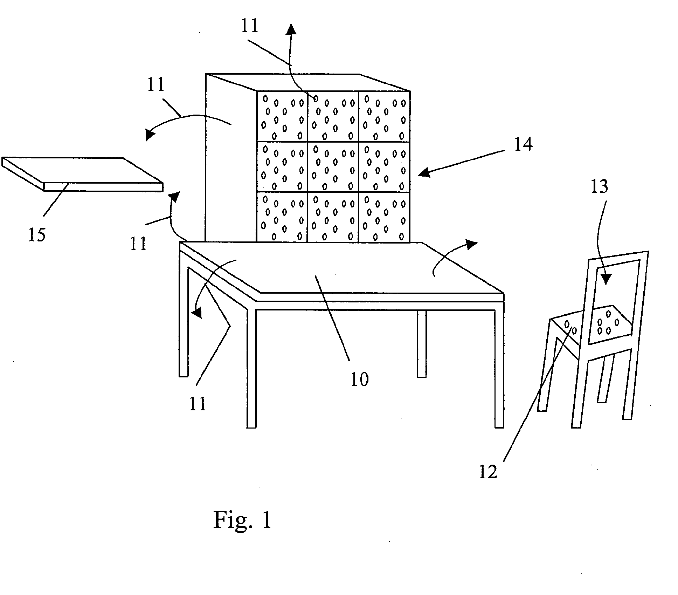

Die Figur 1 zeigt verschiedene Ausführungsbeispiele, wie leuchtende Sichtflächen an verschiedenen Einrichtungsgegenständen angeordnet werden können. Beispielsweise kann die Tischplatte 10 eines Tisches oder auch die Stirnseiten der Platte mit leuchtenden Flächen ausgerüstet sein. Ebenso kann eine Stuhl 12, dessen Sitz- oder Rückenfläche mit leuchtenden Elementen versehen sein. Jede Leuchtfläche ist symbolisch durch einen Pfeil 11 dargestellt, der die Lichtaussendung symbolisieren soll.

Es ist auch möglich, die Teile eines Regals 14, beispielsweise dessen Rückwand, die Seitenwand, die Borde 15 oder dgl. mit leuchtenden Flächen zu versehen.

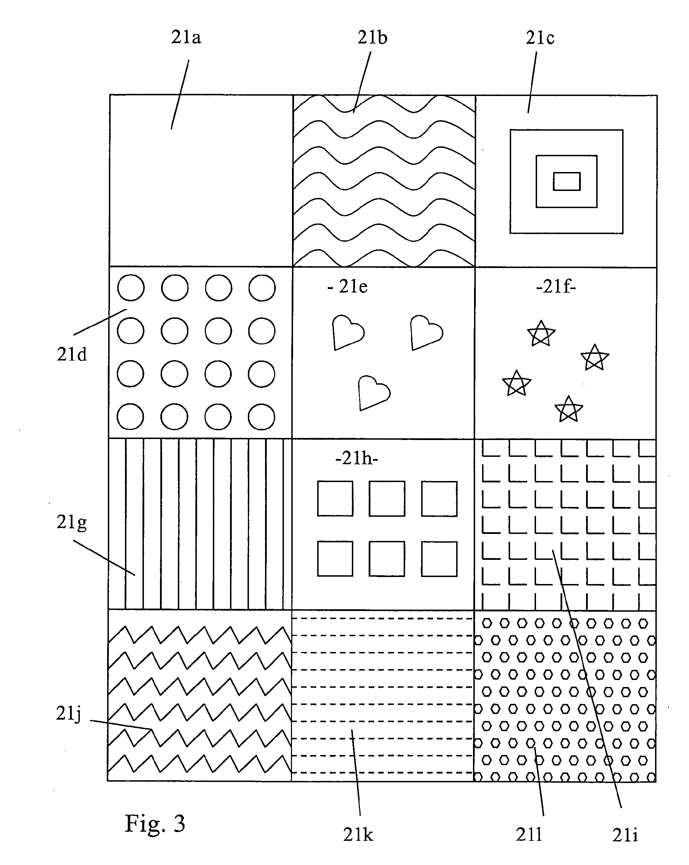

Die Figur 3 zeigt, dass auch die Bekleidungen eines Raumes mit leuchtenden Sichtflächen versehen sind. Der Fußboden 16 kann streifenförmige Leuchtflächen (Streifen 17) tragen, die dem Raum optisch Tiefe verleihen. Ebenso können solche leuchtenden Streifen 17 an der Decke 18 angeordnet sein. Darüber hinaus kann auch die Verkleidung 19 der Wände mit leuchtenden Paneelen 20 ausgerüstet sein.

Die Figur 3 zeigt verschiedene Vorschläge für die Musterung der erfindungsgemäßen, leuchtenden Sichtflächen. Diese Oberflächen 21a-21l stellen jedoch nur bevorzugte Ausführungsbeispiele dar und sind nicht einschränkend zu verstehen.

Während die Oberfläche 21 a ganzflächig einfarbig ist, ist die Oberfläche 21 b mit Wellenlinien oder die Oberflächen 21 c bis 21l mit geometrischen Mustern belegt.

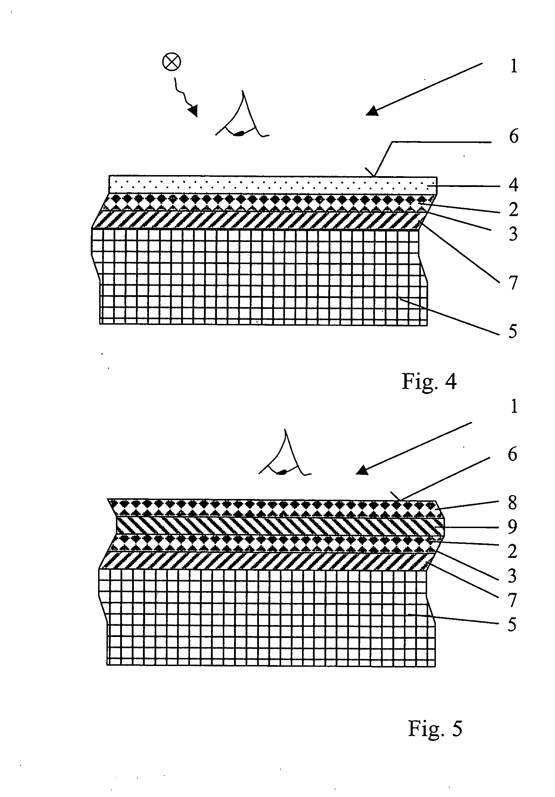

In Figur 4 wird beispielhaft ein einfaches Einrichtungselement (1) mit einer Lumineszenzstruktur (3) dargestellt. Die transparente Schicht (4) kann dabei aus den unterschiedlichsten thermoplastischen Materialen in Form von extrudierten oder coextrudierten oder gegossenen Folien gebildet werden, deren Art und Zusammensetzung bereits schon im allgemeinen Beschreibungsteil beschrieben wurde.

In Figur 5 wird beispielhaft ein Einrichtungselement (1) mit einer Lumineszenzstruktur (3) dargestellt, bei dem eine transparente Melaminharzdeckfolie (8) Verwendung findet und liegt darunter die grafische Gestaltung (9) und die grafisch gestaltete Lumineszenzstruktur (3) und sind diese Schichten mit einer zumindest einlagigen, jedoch im allgemeinen mehrlagigen, faserverstärkten Duroplastschicht durch Lamination mit dem Körperelement (5) verbunden.

Das Körperelement (5) wird üblicherweise in Dicken von 2 bis 50 mm verwendet und die faserverstärkten Duroplastschichten werden zumindest einlagig, im allgemeinen jedoch mehrlagig verwendet und weisen eine Grammatur von 20 bis 1.500 gr/m@, typisch von 200 bis 400 gr/m² auf. In einer nicht in dieser Figur dargestellten Variante kann bereits in die transparente Melaminharzdeckfolie (8) ein Lumineszenzeffekt (2) eingearbeitet werden. Dabei muß jedoch mit entsprechend feinen Lumineszenzeffekt (2) Elementen beziehungsweise Pigmenten gearbeitet werden, da ansonsten die Transparenz und der Haftverbund leiden würde.

Durch den geringen möglichen Füllgrad derartiger transparenter Melaminharzdeckfolien (8) wird bevorzugt ein zusätzliche darunter angeordnete Lumineszenzstruktur (3) angeordnet. Die transparente Melaminharzdeckfolie (8) darf dabei das einfallende Licht und das emittierte Licht möglichst wenig reduzieren.

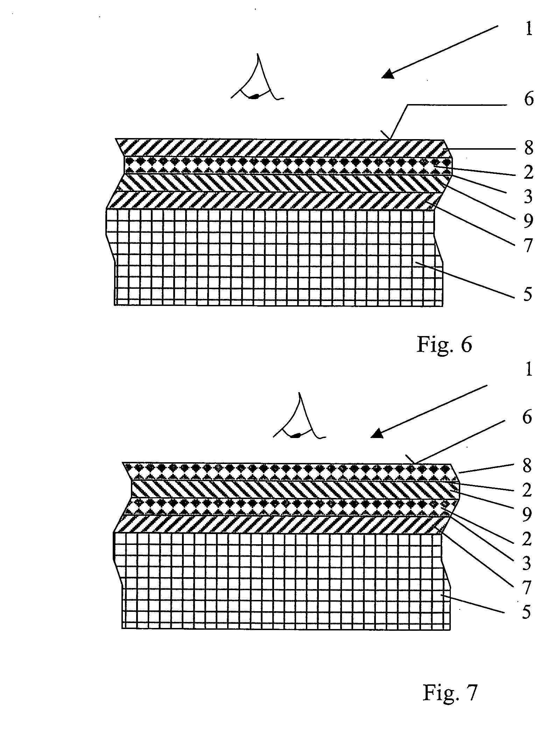

In Figur 6 wird gegenüber Figur 5 die transparente Melaminharzdeckfolie (8) zuerst mit einer grafisch gestalteten Lumineszenzstruktur (3) versehen und dann mit einer grafischen Gestaltung (9) versehen.

In Figur 7 wird gegenüber Figur 5 und 6 zusätzlich in die Melaminharzdeckfolie (8) ein Lumineszenzeffekt (2) in Form von flächenartig und/oder matrixartig verteilten Pigmenten vorgesehen. Dabei werden bevorzugt feinkörnige Pigmente mit Abmessungen von einigen wenigen µm bis zu einigen 50 µm verwendet, insbesondere im Bereich von 1 bis 30 µm und speziell im Bereich von 3 bis 25 µm.

### Bezugszeichenliste

- 1: Einrichtungselement
- 2: Lumineszenzeffekt
- 3: Grafisch gestaltete Lumineszenzstruktur
- 4: Transparente Schicht
- 5: Körperelement
- 6: Oberfläche
- 7: Reflektorschicht
- 8: Melaminharzdeckfolie
- 9: Grafische Gestaltung
- 10: Tischplatte
- 11: Pfeilrichtung
- 12: Stuhl
- 13: Rückenlehne
- 14: Regal
- 15: Regalbord
- 16: Boden
- 17: Streifen
- 18: Decke
- 19: Verkleidung
- 20: Paneel
- 21: Oberfläche 21a -I

## Patentansprüche

1. Einrichtungselement mit leuchtenden Sichtflächen, **dadurch gekennzeichnet, dass** die leuchtende Sichtfläche (1,6,10-21) aus mindestens einer, mindestens stückweise auf der Oberfläche des Einrichtungselementes integrierte Leuchtfolie (2-9) besteht.

2. Einrichtungselement nach Anspruch 1, **dadurch gekennzeichnet, dass** die Leuchtfolie eine unter Ausnutzung des Lumineszenz-Effektes leuchtende Folie ist.

3. Einrichtungselement nach Anspruch 2, **dadurch gekennzeichnet, dass** die unter Ausnutzung des Lumineszenz-Effektes leuchtende Folie durch eine fremde Strahlungsquelle angeregt wird.

4. Einrichtungselement nach Anspruch 2, **dadurch gekennzeichnet, dass** die unter Ausnutzung des Lumineszenz-Effektes leuchtende Folie durch ein elektrisches Wechselfeld angeregt wird.

5. Einrichtungselement nach einem der Ansprüche 1 bis 4, **dadurch gekennzeichnet, dass** das die Leuchtfolie aufgrund eines Nachleucht-Effektes leuchtet.

6. Einrichtungselement nach einem der Ansprüche 1 bis 5, **dadurch gekennzeichnet, dass** die leuchtende Sichtfläche auf einem Möbelstück angeordnet ist.

7. Einrichtungselement nach einem der Ansprüche 1 bis 6, **dadurch gekennzeichnet, dass** die leuchtende Sichtfläche auf einer beliebigen Raumwand eines Innenraumes - auch in Luft-, Wasser- und Landfahrzeugen - angeordnet ist.

8. Verfahren zur Herstellung eines Einrichtungselementes (1) mit leuchtenden Sichtflächen, **dadurch gekennzeichnet, dass** auf der Sichtfläche mindestens eine Leuchtfolie angeordnet wird und dass deren Lumineszenzstruktur (3) auf oder in einer transparenten flächigen bogen- oder bahnförmigen- Schicht (4) erzeugt wird und die Lumineszenzstruktur (3) aus matrixartig verteilten anorganischen Pigmenten mit einem Lumineszenzeffekt (2) gebildet wird und der Lumineszenzeffekt (2) durch langnachleuchtende anorganische Phosphore gebildet ist.

9. Verfahren zur Herstellung eines Einrichtungselementes (1) mit leuchtenden Sichtflächen, **dadurch gekennzeichnet, dass** auf der Sichtfläche mindestens eine Leuchtfolie angeordnet wird und dass deren Lumineszenzstruktur (3) auf oder in einer transparenten flächigen bogen- oder bahnförmigen- Schicht (4) erzeugt wird und die Lumineszenzstruktur mittels im elektrischen Feld anregbarer zinksulfidischer Elektroluminophore erzeugt wird und das Einrichtungselement (1) aus zumindest einer transparenten Schicht (4) und einer Lumineszenzstruktur (3) und einem Körperelement (5) besteht und diese mittels Druck und Temperatureinwirkung miteinander verbunden sind.

10. Verfahren zur Herstellung eines Einrichtungselementes (1) nach einem der Ansprüche 1 bis 9, **dadurch gekennzeichnet, dass** das Einrichtungselement leuchtende Sichtflächen aufweist.

11. Verfahren zur Herstellung eines Einrichtungselementes (1) nach einem der Ansprüche 1 bis 10, **dadurch gekennzeichnet**, das die transparente Schicht (4) aus einem Melaminharz-getränktem Papier gebildet wird.

12. Verfahren zur Herstellung eines Einrichtungselementes (1) nach einem der Ansprüche 1 bis 11, **dadurch gekennzeichnet, dass** die transparente Schicht (4) aus einer thermoplastischen Folie auf Basis Polyvinylfluorid (PVF), und /oder aus Polyvinylidenfluorid (PVdF), oder Polycarbonat (PC), Polymethylmethacrylat (PMMA), Acrylnitril-Butadien-Styrol (ABS), Polyurethan (PU), Polyethylenterephtalat (PETP), Polyethersulfon (PES), Polyimid (PI), Polypropylen (PP), Polyethylen (PE), Polyetherimid (PEI), Polyetheretherketon (PEEK) und Mischungen (Blends) der genannten Polymere oder aus einem Material aus Polychlortrifluorethylen und Copolymeren (PCTFE) und dergleichen thermoplastische und transparente Folien mit einer Dicke von 6 bis 150 Mikrometern und darüber als auch wesentlich dickeren Folien aus beispielsweise Polyether-Imid-Blocker (PEI) Material mit einer Dicke im Bereich 100 bis 1.200 Mikrometern gebildet wird.

13. Verfahren zur Herstellung eines Einrichtungselementes (1) nach einem der Ansprüche 1 bis 12, **dadurch gekennzeichnet, dass** der Lumineszenzeffekt (2) durch Verwendung von Strontium-Aluminat Pigmenten und/oder Strontium-Silikat Pigmenten und/oder langnachleuchtenden anorganischen Pigmenten mit einer Nachleuchtdauer größer 5 Stunden in einer entsprechenden Polymermatrix gebildet wird.

14. Verfahren zur Herstellung eines Einrichtungselementes (1) nach einem der Ansprüche 1 bis 13, **dadurch gekennzeichnet, dass** der Lumineszenzeffekt (2) durch Verwendung von photolumineszierenden anorganischen Pigmenten gebildet wird, die im Bereich der langwelligen UV-Strahlung bis im blauen Bereich, insbesondere im Bereich 350 bis 400 nm und bis 500 nm anregbar sind und im sichtbaren Wellenlängenbereich von etwa 400 bis 700 nm eine Emission bewirken.

15. Verfahren zur Herstellung eines Einrichtungselementes (1) nach einem der Ansprüche 1 bis 14, **dadurch gekennzeichnet, dass** der Lumineszenzeffekt (2) durch Verwendung von Anti-Stokes Pigmenten bewirkt wird und derart durch Anregung im NIR Bereich von etwa 680 bis 1500 nm mittels eines Mehrphotonenprozesses eine Emission im sichtbaren Wellenlängenbereich von etwa 400 bis 700 nm erreicht wird.

16. Verfahren zur Herstellung eines Einrichtungselementes (1) nach einem der Ansprüche 1 bis 15,**dadurch gekennzeichnet, dass** der Lumineszenzeffekt (2) durch Verwendung von im elektrischen Feld anregbaren zinksulfidischen Elektroluminophoren erzeugt wird und eine Emission im sichtbaren Wellenlängenbereich von etwa 400 bis 700 nm durch Einprägen eines elektrischen Wechselfeldes erreicht wird.

17. Verfahren zur Herstellung eines Einrichtungselementes (1) nach einem der Ansprüche 1 bis 16, **dadurch gekennzeichnet, dass** der Lumineszenzeffekt (2) durch Verwendung einer Kombination aus den in den Ansprüchen 8 bis 11 genannten Effekte erzeugt wird.

18. Verfahren zur Herstellung eines Einrichtungselementes (1) nach einem der Ansprüche 1 bis 17, **dadurch gekennzeichnet, dass** das Körperelement (5) mittels Spritzgusstechnik oder mittels Gießtechnik oder mittels Laminationtechnik oder mittels Präge-Press-Technik oder mittels Schäumen hergestellt wird.

19. Verfahren zur Herstellung eines Einrichtungselementes (1) nach einem der Ansprüche 1 bis 18, **dadurch gekennzeichnet, dass** eine Reflektorschicht (7) unterhalb der Lumineszenzstruktur (3) angeordnet wird und dabei metallische Pigmente und/oder Glimmerflakes und/oder metallische Flakes und/oder diffraktive Strukturen und/oder Glasperlen in einer polymeren Matrix mit einem Brechungsindex von 1,9 bis 2,1 und/oder eine Aluminiumschicht und/oder eine dünne hochreflektierende Edelstahlfolie oder dergleichen reflektierende Elemente verwendet werden und diese Reflektorschicht (7) sowohl zur Lumineszenzstruktur (3) als auch zum Körperelement (5) haftvermittelnde Eigenschaften aufweist.

20. Verfahren zur Herstellung eines Einrichtungselementes (1) nach einem der Ansprüche 1 bis 19, **dadurch gekennzeichnet, dass** die Lumineszenzstruktur (3) mittels einem grafischen Druckprozess, insbesondere einem Flachbettsiebdruckprozess als auch einem Zylindersiebdruckprozess, als auch digitaler Druckverfahren, wie einem InkJet-Verfahren und dergleichen grafische Druckverfahren hergestellt wird.

21. Verfahren zur Herstellung eines Einrichtungselementes (1) nach einem der Ansprüche 1 bis 20, **dadurch gekennzeichnet, dass** die Lumineszenzstruktur (3) mittels einem grafischen Siebdruckprozess unter Verwendung von wasserbasierenden Siebdruckfarben hergestellt wird und dabei Siebdruckfarben mit einem Füllgrad von größer 50-Gewichts-Prozent, insbesondere größer 70-Gewichtsprozent verwendet werden.

22. Verfahren zur Herstellung eines Einrichtungselementes (1) nach einem der Ansprüche 1 bis 21, **dadurch gekennzeichnet, dass** die Lumineszenzstruktur (3) mittels einem grafischen Siebdruckprozess auf Basis wasserbasierender Siebdruckfarbe mit dispergierten Lumineszenzeffekt (2) Pigmenten derart hergestellt wird, dass in einem Siebdruckvorgang zumindest eine Trockenschichtstärke von größer 50 µm, insbesondere größer 100 µm erreicht wird.

23. Verfahren zur Herstellung eines Einrichtungselementes (1) nach einem der Ansprüche 1 bis 22, **dadurch gekennzeichnet, dass** die transparente Schicht (4) oberflächig mit einer Prägestruktur ausgeführt wird.

24. Verfahren zur Herstellung eines Einrichtungselementes (1) nach einem der Ansprüche 1 bis 22, **dadurch gekennzeichnet, dass** in die Lumineszenzstruktur (3) und/oder in oder auf die transparente Schicht (4) ein farbkonvertierendes System aus organischen Stoffen und/oder anorganischen Pigmenten gegeben wird und derart die Emission des Pigmentes mit dem Lumineszenzeffekt (2) farblich beziehungsweise wellenlängenmäßig um einige 10 nm bis über 100 nm erhöht und insbesondere derart statt einer blaugrünen Lumineszenzemission eine weißliche Emission bewirkt.

25. Verfahren zur Herstellung eines Einrichtungselementes (1) nach einem der Ansprüche 1 bis 24, **dadurch gekennzeichnet, dass** die transparente Schicht (4) aus einem Melaminharz-getränktem Papier gebildet wird und anorganische Pigmente mit einem Lumineszenzeffekt (2) in das Melaminharz gemischt sind und insbesondere die Pigmente bevorzugt an der innenliegenden Seite angeordnet werden.

26. Verfahren zur Herstellung eines Einrichtungselementes (1) nach einem der Ansprüche 1 bis 25, **dadurch gekennzeichnet, dass** die transparente Schicht (4) aus einem Melaminharz-getränktem Papier gebildet wird und innenseitig mit einer grafischen Gestaltung (9) versehen ist und anorganische Pigmente mit einem Lumineszenzeffekt (2) in das Melaminharz gemischt sind und insbesondere die grafische Gestaltung (9) transluzent ausgeführt ist und derart auch eine unter der grafischen Gestaltung (9) angeordnete Lumineszenzstruktur (3) mit Pigmenten mit einem Lumineszenzeffekt (2) eine Aufhellung beziehungsweise Hinterleuchtung der grafischen Gestaltung (9) bewirkt.

27. Verfahren zur Herstellung eines Einrichtungselementes (1) nach einem der Ansprüche 1 bis 26, **dadurch gekennzeichnet, dass** die grafische Gestaltung (9) transluzent ausgeführt ist und beispielhaft eine Holzstruktur, eine Marmorstruktur oder dergleichen für ein Einrichtungselement geeignete künstlerische Gestaltung aufweist und durch eine zumindest dahinter angeordnete Lumineszenzstruktur (3) eine Hinterleuchtung beziehungsweise Aufhellung erfährt und bevorzugt auch noch an der Sichtseite eine zusätzliche Lumineszenzstruktur (3) und/oder in einer Polymer- oder Harz-Matrix Pigmente mit einem Lumineszenzeffekt (2) aufweist.

28. Verfahren zur Herstellung eines Einrichtungselementes (1) nach einem der Ansprüche 1 bis 27, **dadurch gekennzeichnet, dass** das Körperelement (5) transparent oder transluzent ausgeführt wird und keine Reflektorschicht (7) angeordnet wird und derart eine Strahlungsanregung von der Rückseite ermöglicht.

29. Verfahren zur Herstellung eines Einrichtungselementes (1) nach einem der Ansprüche 1 bis 28, **dadurch gekennzeichnet, dass** das Körperelement (5) transparent oder transluzent ausgeführt wird und keine Reflektorschicht (7) angeordnet wird und in das Körperelement (5) matrixartig Pigmente mit einem Lumineszenzeffekt (2) eingebaut sind und derart durch Strahlungsanregung von der Rückseite oder von beiden Seiten eine Lumineszenzemission bewirkt werden kann.

30. Einrichtungselement (1) mit einem Lumineszenzeffekt (2) in Form einer unterhalb einer transparenten Schicht (4) angeordneten Lumineszenzstruktur (3) hergestellt nach einem der Ansprüche 1 bis 29, **gekennzeichnet durch** die Verwendung als Möbelelement, beispielsweise als Stuhl, Tisch, Kasten, Boden-, Decken- oder Wandelement und dergleichen Element, das in einem Haus oder Büro oder einem Gebäude, Fahrzeug, Schiff oder Flugzeug Verwendung findet.
